# EUROPEAN PATENT APPLICATION

(11) **EP 2 940 582 A1**
(43) Date of publication of application: **04.11.2015**
(21) Application number: 14166750.1
(22) Date of filing: 30.04.2014
(51) Int. Cl.: G06F 9/54

(54) **Automated configuration of virtual infrastructure manager access for the virtual network function manager**

(71) Applicant: DoCoMo Communications Laboratories Europe GmbH, 80687 München (DE)
(72) Inventor: Kiess, Wolfgang, 80687 Munich (DE); Perez Caparros, David, 80687 Munich (DE); Triay Marques, Joan, 80687 Munich (DE); Khan, Ashiq, 80687 Munich (DE)
(74) Representative: Schöniger, Franz-Josef

(57) **Abstract**

A method and apparatus are presented for configuring a virtual network function manager (VNFM) managing a virtual network function (VNF) to access a virtual infrastructure manager (VIM), wherein the VNFM accesses the VIM through an interface, the interface having a VIM interface type, characterized in that the VNFM supports multiple VIM interface types, and the method comprising the steps of obtaining by the VNFM information about the VIM interface type supported by the VIM, and accessing the VIM by the VNFM through the interface according to the information about the VIM interface type.

## Description

### FIELD OF THE INVENTION

The present technology relates to a method and apparatus for configuring a virtual network function manager (VNFM) managing a virtual network function (VNF) to access a virtual infrastructure manager (VIM), wherein the VNFM accesses the VIM through an interface, the interface having a VIM interface type, wherein the VNFM supports multiple VIM interface types.

### BACKGROUND OF THE INVENTION

Network Function Virtualization (NFV) is a new approach to delivering communication services. NFV applies virtualization and automation techniques known from general purpose information technology (IT) to move network functions, such as Firewall, Deep Packet Inspection (DPI), Serving Gateway, in an operator's network from dedicated hardware to general purpose IT infrastructure. These transformed network functions are known as Virtual Network Functions (VNF). A VNF can be composed by one or several virtual machines and virtual networks which altogether implement the network function.

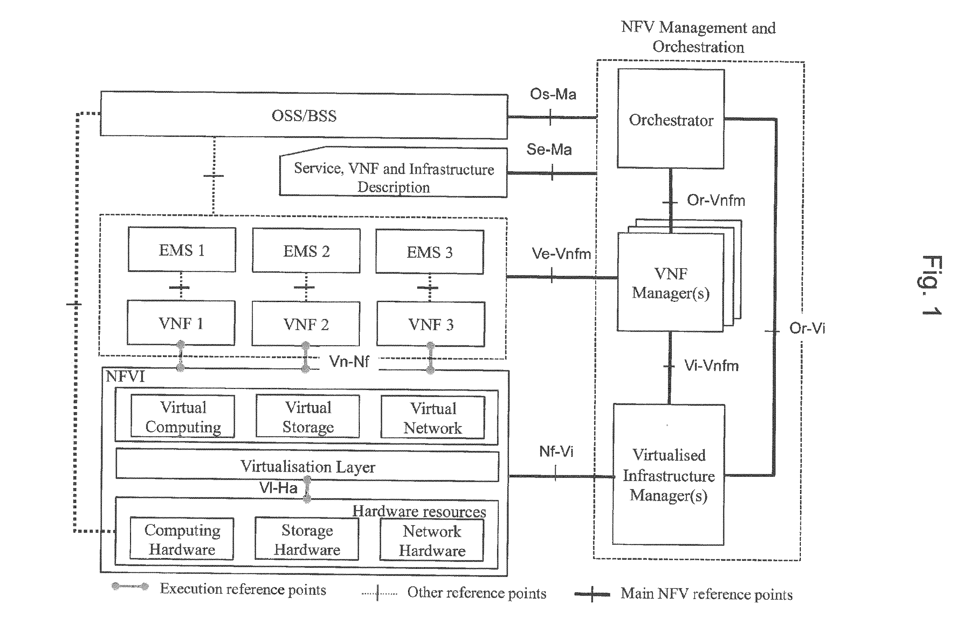

The specifications for NFV are being driven by an Industry Specification Group (ISG) in the European Telecommunications Standards Institute (ETSI). ETSI NFV has defined an NFV architectural framework, which focuses on the new functional blocks and reference points, brought by the virtualization of an operator's network. Figure 1 shows an architectural overview over the functional building blocks of a NFV architectural framework.

The Orchestrator manages global infrastructure resources and realizes network services on top of such an infrastructure. The Orchestrator has knowledge about the resources capacity managed by the VIM. The VIM is thereby managing a specific virtual infrastructure, e.g. a specific cloud system, so that there is generally a correspondence between the VIM and the infrastructure it manages. Thus, selecting a VIM means selecting the infrastructure on which, e.g., a VNFM is to be deployed.

While the Orchestrator provides global resource allocation, the VNFMs can interact directly with the VIM, which could, e.g., be a Cloud Management System (CMS) to request management of virtualized resources as part of the deployment and management of VNFs. An example for such an interaction would be a capacity extension for a deployed VNF that can consist of the VNFM requesting additional virtual machines from the CMS that are then added to the VNF.

Current CMSs, such as Amazon EC2 or OpenStack, exhibit very different Application Programming Interfaces (APIs). For instance, the Amazon EC2 API actions and data types for creating virtual machines are different from the ones implemented in the OpenStack API for the same task. This problem is referred to as the "cloud heterogeneity problem".

When an operator wants to use cloud technology to deploy one or more VNFs, the operator is faced with the problem that different interfaces of the CMSs have to be dealt with. In this case, the Orchestrator holds information about a global multi-domain virtualized infrastructure, wherein the term 'multi-domain' refers to multiple different underlying VIMs and virtual infrastructures, e.g. cloud systems, and the term 'global' expresses that the overall infrastructure may be distributed on a large scale.

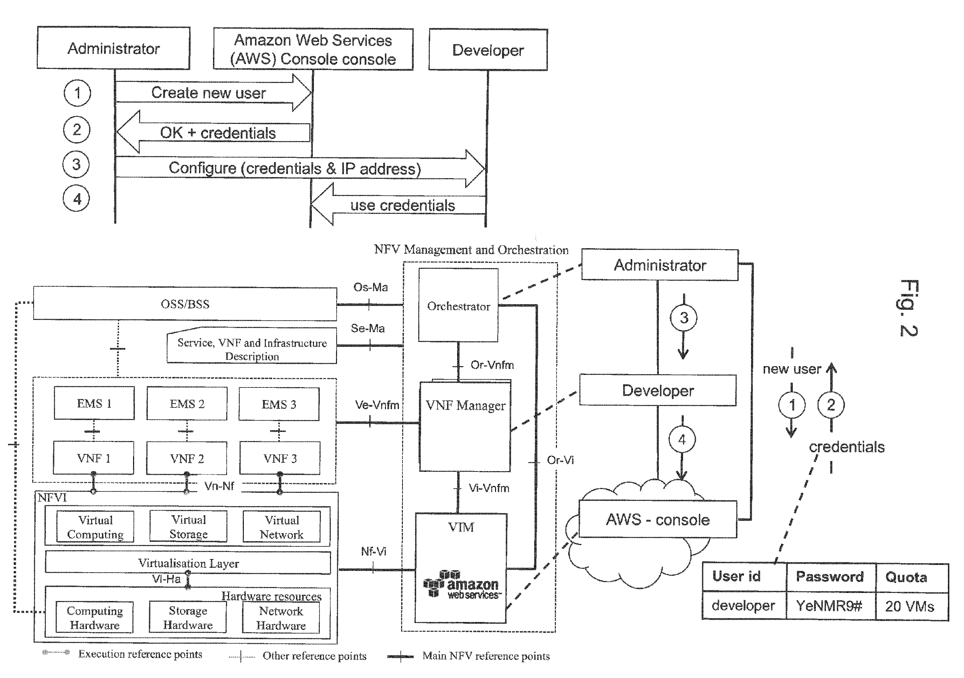

A related prior art is depicted in Figure 2, which shows the Amazon EC2 user management process. The technology illustrated in Figure 2 does not solve the above outlined problem but it is related to the present application since some of the signaling is similar to the signaling of embodiments disclosed in the present application. As will become apparent later, the technology of embodiments disclosed in the present application goes beyond the signaling illustrated in Figure 2 with the components necessary to deal with and solve the cloud heterogeneity problem.

The example of Figure 2 illustrates the principle and steps of interaction between an administrator, a developer, and an AWS console. The purpose of this illustration is solely to demonstrate an analogy between said steps of interaction and the steps of interaction between the functional building blocks of the NFV Architecture Framework according to the present invention. It should be understood that, e.g., the entities "administrator" and "developer", solely serve to illustrate this analogy but are not themselves parts of building blocks of the present invention.

The interaction and signaling illustrated in Figure 2 consist of the following steps:
- Step 1: create new user,
- Step 2: get agreement and credentials,
- Step 3: transmit credentials etc. to a third party (e.g. a developer, VNF manager), and
- Step 4: use of credentials by third party.

As shown in Figure 2, these steps and the involved parties/users can be mapped (according to the aforementioned analogy) to the different functional blocks depicted in the NFV Architecture Framework, where the users correspond to Orchestrator, VNFM, and VIM. With reference to Figure 2, this correspondence means that the functional building blocks perform signaling similar to the signaling between an administrator, a developer, and a cloud management console, wherein the latter is, in the particular illustration of Figure 2, the Amazon Web Service Console (AWS Console).

While the process illustrated in Figure 2 allows to create a new user account within the CMS and to transfer the access credentials to a user, it does not solve the cloud heterogeneity problem which in this example could be phrased as: "how does a developer know that he/she is dealing with an Amazon EC2 cloud and that he/she should use a respective method to contact the cloud management system?".

### SUMMARY OF THE INVENTION

According to one embodiment, there is provided a method for configuring a virtual network function manager (VNFM) managing a virtual network function (VNF) to access a virtual infrastructure manager (VIM), wherein the VNFM accesses the VIM through an interface, the interface having a VIM interface type, characterized in that the VNFM supports multiple VIM interface types, and the method comprising the steps of obtaining by the VNFM information about the VIM interface type supported by the VIM, and accessing the VIM by the VNFM through the interface according to the information about the VIM interface type.

This method has the effect and advantage that a VNFM may access different VIMs with different interfaces and thus a VNF managed by the VNFM may be created in different virtual infrastructures corresponding to the VIMs being accessed by the VNFM. Furthermore, multiple different virtual infrastructures may be used in parallel when deploying a VNF. Furthermore, the VNFM, by accessing VIMs corresponding to different virtual infrastructures, may use and access specific functionality of the infrastructure when deploying a VNF. Furthermore, the need for a common interface among VIMs of different virtual infrastructures is obviated.

In one embodiment, the information about the VIM interface type supported by the VIM is obtained by one of the following methods: a message exchange between an Orchestrator and the VNFM, wherein the Orchestrator holds information about global and multi-domain virtualized infrastructure resources and wherein the Orchestrator provides access credentials of the VIM, VIM endpoint interface address, and information about the interface type supported by the VIM to the VNFM, or a message exchange between a resolver entity and the VNFM, wherein the resolver entity provides a mapping from a VIM identifier to the interface type supported by the VIM and wherein the resolver entity provides information about the interface type supported by the VIM to the VNFM.

This has the effect and advantage that the VNFM is provided with information that enables it to access a VIM through the appropriate interface, which has a VIM interface type and thus may provide functionality specific to the VIM, and thus enables it to access functionality specific of the VIM and the infrastructure managed by the VIM.

In one embodiment, the information about the VIM interface type supported by the VIM is obtained by a message exchange between the VNFM and the VIM, wherein said message exchange is performed by obtaining by the VNFM a VIM endpoint interface address, iterating by the VNFM through VIM interface types supported by the VNFM, wherein the VNFM attempts accessing the VIM through each supported VIM interface type, and obtaining by the VNFM from the VIM in response to a successful attempt of said attempted accessing an information about an interface type supported by the VIM. The information about the supported interface type may not be explicitly included in a response message from the VIM to the VNFM but may be implicitly communicated from the VIM to the VNFM, e.g., simply by the VIM responding correctly to an access attempt of the VNFM.

This has the effect and advantage that the VNFM does not require in advance to accessing a VIM detailed information about the VIM interface type. Yet, once the VNFM determines that it supports the endpoint interface of the VIM, it may access functionality specific to the VIM type through the VIM interface.

In one embodiment, the information about the VIM interface type supported by the VIM is obtained by a message exchange between the VNFM and the VIM, wherein said message exchange is performed by obtaining by the VNFM a VIM endpoint interface address, accessing the VIM through a set of operations in the interface between the VNFM and the VIM, and obtaining by the VNFM from the VIM in response to said accessing an information about an interface type supported by the VIM.

This has the effect and advantage that the VNFM does not require in advance to accessing a VIM detailed information about the VIM interface type since information about the VIM interface type may be obtained through a set of operations in the interface between the VNFM and the VIM, wherein in some embodiments, said set of operations may be a common set of operations among different VIM interfaces so that such common set of operations may be minimal and/or standardized.

In one embodiment the above described method further comprises the steps of obtaining from a plurality of candidate VNFMs information about VIM interface types they support and selecting from the plurality of VNFMs a first VNFM such that the first VNFM supports at least the interface type supported by said VIM, the first VNFM being said VNFM.

This has the effect and advantage that it is possible to make use of a specific VIM by choosing from a plurality of VNFMs one that supports being deployed on the specific VIM. This is advantageous, e.g., if the Orchestrator determines that the specific VIM is preferable or the only possible alternative for providing resources to deploy a VNFM and subsequently instantiate VNFs corresponding to the VNFM.

In one embodiment the above described method further comprises the steps of obtaining from the VNFM information about VIM interface types it supports and selecting from a plurality of candidate VIMs a first VIM such that the VNFM supports at least the interface type supported by the VIM, the first VIM being said VIM.

This has the effect and advantage that the VIM, on which a VNFM is to be deployed, may be chosen from a plurality of candidate VIMs. The advantage of such selection possibility may be that the selection may be used, e.g., to control reliability, cost, or other factors of the deployment of the VNFM and the corresponding VNFs on the virtual infrastructure managed by the VIM.

In one embodiment the selecting from a plurality of candidate VIMs may also be based on one or more of the following criteria: the virtualized resources provided by the managed virtual infrastructure and the geographical location of the infrastructure.

This has the effect and advantage that the VIM and correspondingly the virtual infrastructure may be chosen according to the availability and accessibility of resources in the virtual infrastructure.

In one embodiment, information about the VIM interface types supported by a VNFM is obtained by one of reading a VNFM descriptor from installation or deployment information available for the VNFM, wherein the VNFM descriptor includes information about the VIM interface types supported by the VNFM, or a message exchange between an Orchestrator and the VNFM, wherein the Orchestrator holds information about global multi-domain virtualized infrastructure.

This has the effect and advantage that the Orchestrator can be aware of the capabilities; in particular the VIM interface types, supported by a VNFM.

In one embodiment the VIM is a cloud management system.

This has the effect and advantage that the VNFM and correspondingly the VNF can be deployed on a specific infrastructure, namely a cloud system, that provides itself a cost effective and highly reliable services on which the VNFM and correspondingly the VNF are deployed, thus leveraging these aspects of the virtual infrastructure and enhancing the cost effectiveness and reliability of the VNF services to be provided.

In one embodiment, information about a VIM interface type includes one or more of the following:
- information about a provider of the VIM
- information about a version of a VIM interface implementation (e.g. API version)
- information about the VIM interface protocol (e.g. HTTP).

This has the effect and advantage that the VIM interface type includes information that is required to perform selecting from a plurality of candidate VIMs according to various criteria and also information required to access a VIM that implements the VIM interface type by a VNFM that receives the information about the VIM interface type and that supports the VIM interface type.

According to one embodiment, there is provided an apparatus for implementing an Orchestrator adapted to manage the configuration of virtual network function managers (VNFMs), and adapted to configuring a VNFM that manages the VNF to access a virtual infrastructure manager (VIM), wherein the VNFM accesses the VIM through an interface, the interface having a VIM interface type, characterized in that the VNFM supports multiple VIM interface types, and
the apparatus comprising:
a module adapted for obtaining by the VNFM information about the VIM interface type supported by the VIM, and
a module adapted for accessing the VIM by the VNFM through the interface according to the information about the VIM interface type.

According to further embodiments there is provided an apparatus further comprising one or more modules to perform the configuring according to a method of any one of the previously described embodiments.

The effects and advantages achieved by the apparatus correspond to the effects and advantages of the embodiments of the method which have been described in detail above.

According to one embodiment, there is provided computer program comprising computer program code which when being executed on a computer enables said computer to carry out a method according of any one of the previously described embodiments.

### DESCRIPTION OF THE DRAWINGS

Figure 1 shows an architectural overview over the functional building blocks of a NFV architectural framework, in particular the ETSI NFV E2E Architectural Framework.
Figure 2 shows the user management process of the Amazon EC2 cloud illustrated on the overview of the NFV architectural framework of Figure 1.
Figure 3 shows an example of instantiating a VNFM to deploy VNFs on an Amazon EC2 cloud, which has been selected among multiple infrastructures according to an embodiment of the present invention.
Figure 4 shows a sequence diagram illustrating the steps and interaction between functional building blocks in the scenario illustrated in Figure 3 according to an embodiment of the present invention.
Figure 5 illustrates a deployment strategy where a VNFM according to an embodiment of the present invention deploys, depending on the load, a VNF on different infrastructures.

### DETAILED DESCRIPTION

At first, some terms used in the description will be defined in the following list of abbreviations.
- CMS: Cloud Management System
- NFV: Network Function Virtualization
- Or: Orchestrator
- VIM: Virtual Infrastructure Manager
- VNF: Virtual Network Function
- VNFM: VNF Manager
- VNFMD: VNFM Descriptor
- API: Application Programming Interface
- URI: Uniform Resource Identifier
- URL: Uniform Resource Locator
- REST: Representational State Transfer

In the following, embodiments of the invention will be described.

In one embodiment, the virtual network function manager configuration involves three functional blocks of the architecture shown in Figure 1:
- the Orchestrator manages global infrastructure resources and realizes network services on top of such an infrastructure; the Orchestrator has knowledge about the resource capacity managed by the VIM and keeps track of all VIMs available, including possibly those that provide connectivity between data centers; the Orchestrator does not have specific data center management rights, which are rather held by the VIM;
- the VNF Manager, responsible for the VNF lifecycle management, such as instantiation, update, query, scaling, and termination of VNFs;
- the Virtualized Infrastructure Manager (VIM), which controls and manages the NFVI compute, storage, and network resources; in the case of a cloud-based NFVI, the VIM can be implemented as a Cloud Management System (CMS).

The problem that different VIMs may have different access interfaces is addressed by embodiments of the present invention. In some instances, as mentioned above, the problem is also referred to as the "cloud heterogeneity problem". By embodiments of the present invention this problem is solved in the context of the NFV architectural framework. In this architectural framework the VNFM functional block has to deal with the cloud heterogeneity problem because it is the entity requesting virtualized resource management. More specifically, the problem to be addressed could be phrased as follows: "Given a VNFM, which may be either already deployed or to be deployed by the Orchestrator, how does the VNFM know which interface type to use in order to connect and manage resources through a given VIM?"

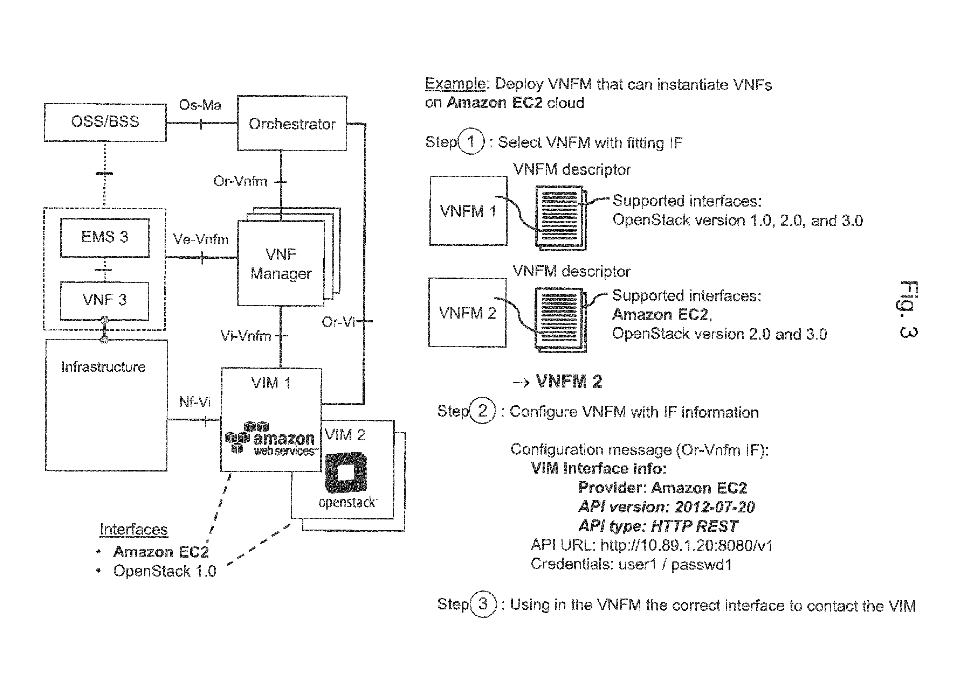

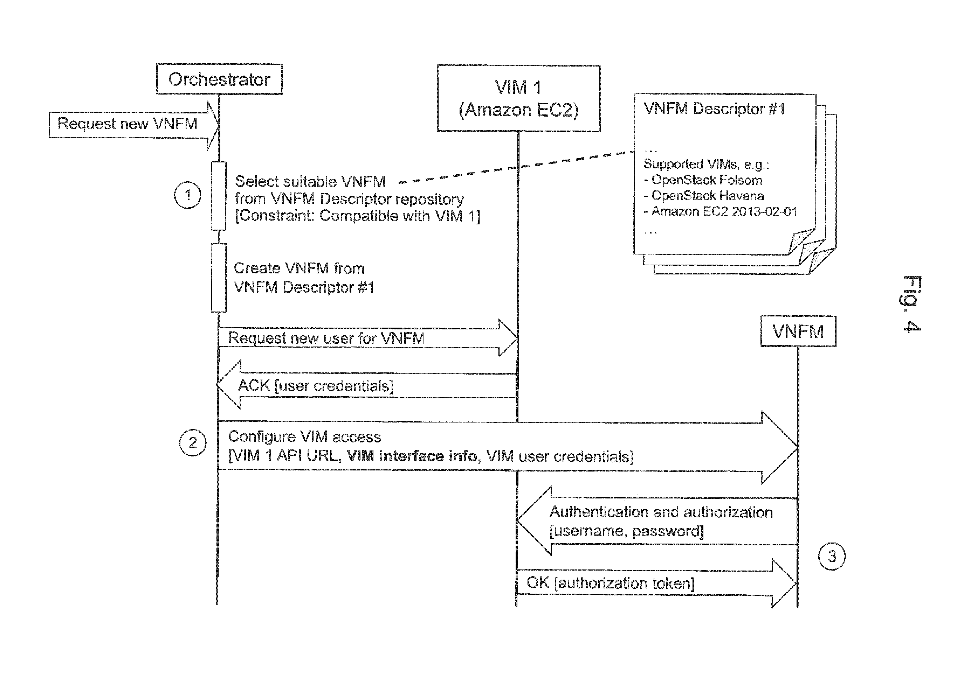

In one embodiment of the invention, VNFM instantiation is performed in the following main steps that are also illustrated in Figure 4:
- Step 1: selecting in the Orchestrator an appropriate VNFM that has the capability to interact with the target VIM. In some embodiments, the selecting may involve VNFM descriptors that describe a VNFM and that specify at least the VIMs supported by the VNFM. The VNFM descriptors may be included in a VNFM descriptor repository that the Orchestrator may access and from which the Orchestrator may select certain VNFM descriptors that match constraints specified by the Orchestrator. For example, a constraint may express that only VNFM descriptors corresponding to VNFMs that support, i.e. are compatible with, a certain VIM interface type, and should be considered for the selecting.
- Step 2: transmitting information from the Orchestrator to the VNFM on the type of VIM and the VIM interface the VNFM should use. In some embodiments, the transmission from the Orchestrator to the VNFM may include a VIM interface info, comprising information about the VIM interface type implemented by the VIM, which is referred to as VIM 1 in Figures 3 and 4.
- Step 3: using in the VNFM the correct interface to contact the VIM. In some embodiments, the using may thereby involve initially the step of authentication and authorization and receiving, by the VNFM, an authorization token from the VIM.

Other embodiments are possible as well, in particular the VNFM could also be provided with the required information for interfacing the VIM directly from the VIM. Also, in some embodiments, step 1, i.e., the selection process, might not be necessary and thus the selecting is optional.

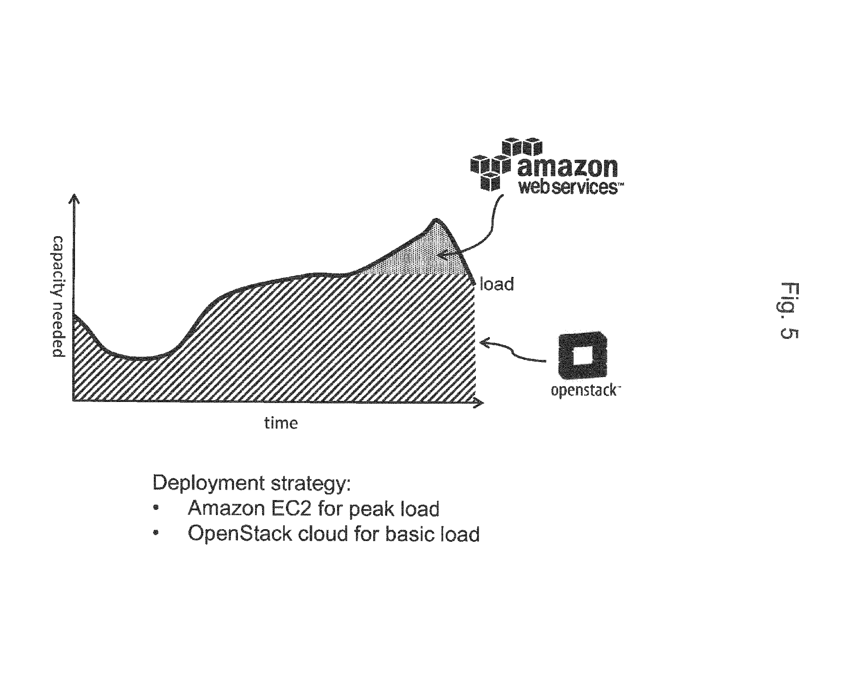

The described embodiment has at least the following advantages:
- The embodiment enables that multiple different clouds, in particular clouds that have cloud types with different interfaces, can be used in parallel. An example for such a deployment strategy is illustrated in Figure 5. In the case where VNF service is demanded at a basic load, the VNF instances are deployed only on an OpenStack cloud infrastructure. In the case where VNF service is demanded at a peak load, a part of the VNF service corresponding to the basic load is provided on the OpenStack cloud and the remaining part of the load that exceeds the basic load is provided on an Amazon EC2 cloud infrastructure. Thereby, i.e. at peak load, VNFs are instantiated on both infrastructures in parallel. In some embodiments, a single VNFM may control instantiations of VNFs in both infrastructures.
- The embodiment enables that cloud-specific extensions can be used, as the VNFM can use a cloud-specific interface, which provides access to use all the extensions specific to the cloud.
- The embodiment provides a solution on how to configure a VNFM to deal with the existence of several non-standard cloud management interfaces.
- The embodiment provides a procedure how a to-be-instantiated VNFM can be selected from a group of VNFMs such that the to-be-instantiated VNFM is compatible with the cloud in which a VNF should be deployed.

In one embodiment, the functional building blocks of the NFV architectural framework have the following characteristics:
- The Orchestrator may be in charge of deploying VNFMs and/or configuring them via a reference point in between them, as described in the ETSI NFV Architectural Framework, which is shown in Figure 1.
- The VNFM supports one or several VIM endpoint interfaces. An endpoint interface may include a programming interface commonly known as API.

The configuration of a VNFM includes information on how to access a certain VIM. During a VIM access configuration step, the Orchestrator provides to the VNFM at least with VIM access credentials (e.g. username and password), VIM endpoint URI (e.g. VIM API URL or IP address), and VIM interface information, which includes:
- VIM provider (e.g. Amazon EC2, OpenStack),
- VIM interface version (e.g. Amazon EC2 API Version 2012-07-20), and
- VIM interface protocol (e.g. HTTP RESTful, XML-RPC, SOAP, etc.).

The term 'provider' is thereby to be understood technically rather than economically, i.e. as a term identifying a certain technical "class" or "category" into which the VIM falls. Different "VIM providers" may therefore be understood as identifying different technical characteristics of an infrastructure, interface, or service, but different "VIM providers" may not necessarily relate to commercial aspects such as identifying different companies or economic units, which are providing the different infrastructures, interfaces, or services offered by different VIM providers.

In the following, two non-limiting examples are described on how the Orchestrator may perform the VNFM selection process:
In a first embodiment, the VNFM is instantiated on demand. In this case, it is assumed that the Orchestrator wants to instantiate a new VNFM, e.g., because there is presently no instance of a VNFM that would be compatible with a given VIM, or all available VNFMs have run out of capacity, or a VNF should be deployed for which no appropriate VNFM instance exists presently. In a first step, the Orchestrator selects a matching VNFM, i.e. a VNMF, which supports the required VIM, interface of the given VIM. To this end, the Orchestrator checks a VNFM Descriptor (VNFMD) for information on a matching interface. A VNFMD may be understood as an information record that contains information about a VNFM, wherein the information record is provided by the vendor of the VNFM. The information record may be implemented as a file or database entry. A VNFM may be implemented using several virtual machines that are together also deployed in an infrastructure, e.g., a cloud, which is not necessarily in the same cloud as the cloud where the VNFs are instantiated. VNFMD includes all information necessary for the VNFM deployment. Such information includes, e.g., the required virtual machines and images, their network topology, and the system requirements for the virtual machines. Furthermore, in the present embodiment, a parameter included in the VNFMD is a list of the VIM interfaces the VNFM supports. This information is used by the Orchestrator to decide which of the VNFMs listed in a catalogue is able to interact with a certain VIM.

In a second embodiment, the VNFM is already up and running. It is further assumed that there are several VNFMs already deployed and running, and that the Orchestrator selects one of the several VNFMs already deployed for interaction with a VIM. In this case, the Orchestrator contacts the already running VNFM via the reference point in between them to check whether it supports a certain type of VIM interface implementation. Such check could be phrased, e.g., as "can this VNFM instantiate resources on Amazon EC2 cloud?". This check may also be a new message required on the interface/reference point between the Orchestrator and the VNFM. The VNFM may reply, the Orchestrator may perform the selection, and in the next step, the Orchestrator may transmit to the selected VNFM the configuration information about how to access the VIM with which it will interact on such interface. This transmission from the Orchestrator to the selected VNFM may include the VIM interface information.

In the following, three non-limiting examples are described on how to obtain information about the VIM interface in the VNFM:
In a first example, the Orchestrator configures the VNFM by sending a configuration message through the interface between the Orchestrator and the VNFM. This configuration message e.g. comprises: VIM access credentials for the VNFM, VIM interface endpoint address, and VIM interface information, including VIM provider, interface implementation version and type of protocol to be used on that interface.

In a second example, the VNFM obtains information on the VIM interface endpoint address, which may, e.g., be an IP address, and detects the cloud type itself by probing. Example implementations of the probing could be one of:
- 'dumb' probing, wherein the VNFM iterates through all of its supported interfaces, trying out each on the VIM until it is determined that one of the interfaces being tried out corresponds to the interface of the VIM,
- a minimal set of operations in the interface between the VNFM and the VIM is standardized. One of them allows "probing" in the sense that the VNFM may retrieve the VIM interface info from the VIM. Once the VIM interface info is known, specific non-standard operations of this VIM interface may be invoked and used by the VNFM.

In a third embodiment, a resolver entity exists somewhere in the network that answers queries of the type "which cloud interface should be used for the CMS under IP address aa.bb.cc.dd?".

Configuring the VNFM such that it may access a certain VIM may involve and/or require multiple types of information. As described for the embodiments and examples above and as also illustrated in step 2 of Figure 3, VIM interface info may include information about the VIM type implementation and the endpoint interface type and version it supports and makes use of. However, VIM interface information may further include specific information needed even in the case when interfacing to the VIM may be fully or in part occur according to a standard but there are still differences in terms of implementation of the interface. For example, differences in the implementation may exist when using different network transport protocols for the interfaces. That is, the semantics of the interface in terms of information and data models is the same for different data transport protocols but the type of interface implementation is different, e.g., RESTful, XML-RPC, SOAP/WSDL, JSON-RPC, etc..

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a computing device acting as a network entity.

## Claims

1. A method for configuring a virtual network function manager VNFM managing a virtual network function VNF to access a virtual infrastructure manager VIM, wherein the VNFM accesses the VIM through an interface, the interface having a VIM interface type,
**characterized in that**
the VNFM supports multiple VIM interface types, and
the method comprising the steps of
obtaining by the VNFM information about the VIM interface type supported by the VIM, and
accessing the VIM by the VNFM through the interface according to the information about the VIM interface type.

2. The method according to claim 1 wherein the information about the VIM interface type supported by the VIM is obtained by one of the following methods:
a message exchange between an Orchestrator and the VNFM, wherein the Orchestrator holds information about global and multi-domain virtualized infrastructure resources and wherein the Orchestrator provides access credentials of the VIM, VIM endpoint interface address of the VIM, and information about the interface type supported by the VIM to the VNFM; or
a message exchange between a resolver entity and the VNFM, wherein the resolver entity provides a mapping from a VIM identifier to the interface type supported by the VIM and wherein the resolver entity provides information about the interface type supported by the VIM to the VNFM.

3. The method according to claim 1 wherein the information about the VIM interface type supported by the VIM is obtained by a message exchange between the VNFM and the VIM, wherein said message exchange is performed by
obtaining by the VNFM a VIM endpoint interface address,
iterating by the VNFM through VIM interface types supported by the VNFM, wherein the VNFM attempts accessing the VIM through each supported VIM interface type, and
obtaining by the VNFM from the VIM in response to a successful attempt of said attempted accessing an information about an interface type supported by the VIM.

4. The method according to claim 1 wherein the information about the VIM interface type supported by the VIM is obtained by a message exchange between the VNFM and the VIM, wherein said message exchange is performed by
obtaining by the VNFM a VIM endpoint interface address,
accessing the VIM through a set of operations in the interface between the VNFM and the VIM, and
obtaining by the VNFM from the VIM in response to said accessing an information about an interface type supported by the VIM,

5. The method according to any of the preceding claims, comprising further the steps of
obtaining from a plurality of candidate VNFMs information about VIM interface types they support and
selecting from the plurality of VNFMs a first VNFM such that the first VNFM supports at least the interface type supported by said VIM, the first VNFM being said VNFM.

6. The method according to one of claims 1 to 4, comprising further the steps of obtaining from the VNFM information about VIM interface types it supports and selecting from a plurality of candidate VIMs a first VIM such that the VNFM supports at least the interface type supported by the VIM, the first VIM being said VIM.

7. The method according to claim 6 wherein the selecting from a plurality of candidate VIMs is also based one or more of the following criteria: the virtualized resources provided by the managed virtual infrastructure and the geographical location of the infrastructure.

8. The method according to any of the preceding claims, wherein information about the VIM interface types supported by a VNFM is obtained by one of
reading a VNFM descriptor from installation or deployment information available for the VNFM, wherein the VNFM descriptor includes information about the VIM interface types supported by the VNFM; or
a message exchange between an Orchestrator and the VNFM, wherein the Orchestrator holds information about global multi-domain virtualized infrastructure.

9. The method according to any of the previous claims, wherein the VIM is a cloud management system.

10. The method according to any of the previous claims, wherein information about a VIM interface type includes one or more of the following:
• information about a provider of the VIM,
• information about a version of the VIM interface implementation, and
• information about the VIM interface protocol type.

11. An apparatus for implementing an Orchestrator
adapted to manage the configuration of virtual network function managers VNFMs, and
adapted to configuring a VNFM that manages the virtual network function VNF to access a virtual infrastructure manager VIM, wherein the VNFM accesses the VIM through an interface, the interface having a VIM interface type,
**characterized in that**
the VNFM supports multiple VIM interface types, and
the apparatus comprising:
a module for obtaining by the VNFM information about the VIM interface type supported by the VIM, and
a module for accessing the VIM by the VNFM through the interface according to the information about the VIM interface type.

12. The apparatus of claim 11, further comprising
one or more modules to perform the configuring according to any of claims 1 to 10.

13. A computer program comprising computer program code which when being executed on a computer enables said computer to carry out a method according to any of claims 1 to 10.
